# EUROPÄISCHE PATENTSCHRIFT

(11) **EP 3 790 730 B1**
(45) Veröffentlichungstag und Bekanntmachung des Hinweises auf die Patenterteilung: **07.02.2024**
(21) Anmeldenummer: 19723107.9
(22) Anmeldetag: 09.05.2019
(51) Int. Cl.: B29C 70/54, B29C 65/48, B29C 64/25

(54) **VERFAHREN ZUM APPLIZIEREN EINES WERKSTOFFES AUF EIN FASERVERBUNDBAUTEIL**
METHOD FOR APPLYING A MATERIAL TO A FIBER COMPOSITE COMPONENT
PROCÉDÉ D'APPLICATION D'UN MATÉRIAU SUR UN ÉLÉMENT COMPOSITE RENFORCÉ DE FIBRES

(30) Priorität: 11.05.2018 DE 102018111306
(43) Veröffentlichungstag der Anmeldung: 17.03.2021
(73) Patentinhaber: Deutsches Zentrum für Luft- und Raumfahrt e.V., 51147 Köln (DE)
(72) Erfinder: HEILMANN, Lennert, 28203 Bremen (DE)
(74) Vertreter: Gramm, Lins & Partner Patent- und Rechtsanwälte PartGmbB
(86) Internationale Anmeldenummer: PCT/EP2019/061961
(87) Internationale Veröffentlichungsnummer: WO 2019/215294

(56) Entgegenhaltungen:
- GB-A- 2 360 483
- US-A- 4 902 215
- Reefmagnet: "Peel ply...how difficult / easy...", , 19. November 2014 (2014-11-19), XP002793225, Gefunden im Internet: URL:http://www.cruisersforum.com/forums/f5 5/peel-ply-how-difficult-easy-136700.html [gefunden am 2019-07-25]

## Beschreibung

Die Erfindung betrifft ein Verfahren zum Applizieren eines Werkstoffes auf ein Faserverbundbauteil innerhalb eines Applikationsbereiches des Faserverbundbauteils, wobei das Faserverbundbauteil aus einem Faserverbundwerkstoff aufweisend ein Fasermaterial und ein Matrixmaterial hergestellt wird. Die Erfindung betrifft ebenso eine entsprechende Verwendung hierzu.

Aufgrund ihrer gewichtsspezifischen Festigkeit und Steifigkeit sind Faserverbundwerkstoffe bei der Herstellung von jedweden Bauteilen kaum mehr wegzudenken. Faserverbundwerkstoffe weisen dabei hauptsächlich zwei wesentliche Bestandteile auf, nämlich zum einen ein Fasermaterial und zum anderen ein Matrixmaterial. Bei der Herstellung von Faserverbundbauteilen aus einem solchen Faserverbundwerkstoff wird dabei in der Regel das Fasermaterial in die entsprechende spätere Bauteilform gebracht und dann das das Fasermaterial einbettende Matrixmaterial ausgehärtet. Das Aushärten geschieht in den allermeisten Fällen durch Temperatur- und ggf. Druckbeaufschlagung, wobei durch das Aushärten die lasttragenden Fasern des Fasermaterials in ihre vorbestimmte Richtung gezwungen werden und dabei zusammen mit dem ausgehärteten Matrixmaterial eine integrale Einheit zur Lastabtragung bilden.

Das Matrixmaterial, welches das Fasermaterial des Faserverbundwerkstoffes entsprechend einbettet, kann dabei bereits in dem Fasermaterial enthalten sein (sogenannte Prepregs) oder später in eine sogenannte Faserpreform, die aus trockenen Fasermaterialien aufgebaut wurde, infundiert werden. Eine Faserpreform stellt dabei eine Art Vorbauteil dar, das aus dem Fasermaterial des Faserverbundwerkstoffes gebildet und dabei zumindest teilweise die spätere Bauteilform des herzustellenden Faserverbundbauteils erhält. Durch das Aushärten des Matrixmaterials, welches in dem Fasermaterial der Faserpreform eingebettet ist, kann so das Faserverbundbauteil hergestellt werden. Die Faserpreform kann demzufolge sowohl aus trockenem Fasermaterial als auch aus vorimprägnierten Fasermaterialien eines Faserverbundwerkstoffes hergestellt werden.

Faserverbundbauteile weisen bei der Herstellung einige Nachteile gegenüber isotropen Werkstoffen auf, da die Bauteilform eines Faserverbundbauteils in der Regel durch entsprechende Formwerkzeuge gebildet werden muss, welche eine Art Negativabdruck des späteren Bauteils darstellen. Daher werden nicht selten komplexe Faserverbundbauteile aus verschiedenen Bauelementen, die entweder aus Faserverbundwerkstoffen hergestellt wurden oder aus isotropen Werkstoffen zusammengesetzt werden, miteinander verklebt, um die komplexe Geometrie herstellen zu können.

Auch die Reparatur von Faserverbundbauteilen kann bei lokalen Beschädigungen durch Kleben von Reparaturpatches erfolgen, indem zunächst an der beschädigten Stelle das Fasermaterial und Matrixmaterial entfernt und so die beschädigte Stelle vorbereitet wird und anschließend dann ein Reparaturpatch eingeklebt wird, sodass der durch den Reparaturvorgang gebildete Freiraum durch den Reparaturpatch ausgefüllt wird. Ein derartiges Kleben, bei dem mindestens einer der Fügepartner ein Faserverbundbauteil aus einem Faserverbundwerkstoff ist, ist dabei nicht ganz unkritisch hinsichtlich der Zertifizierung und Validierung. So müssen gerade im Bereich der Luft- und Raumfahrt hohe Maßstäbe an eine derartige Klebverbindung gestellt werden, um insbesondere auch bei sicherheitskritischen Bauteilen den Anforderungen an die Sicherheit zu genügen. Es ist daher von besonderem Interesse, derartige Klebverbindungen prozesssicher auszuführen.

Oftmals werden solche Faserverbundbauteile auch durch Lackierungen und Beschichtungen veredelt, so dass derartige Werkstoffe, die auf ein solches fertig hergestelltes Faserverbundbauteil appliziert werden, prozesssicher aufgebracht und auf der Oberfläche eines solchen Faserverbundbauteils sicher halten müssen. Dabei besteht grundsätzlich das Bedürfnis, dass derartige Beschichtungen auch unter gegebenen Stressbedingungen sicher an der Oberfläche des Faserverbundbauteils haften.

Aus der nachveröffentlichten DE 10 2017 113 430.1 ist ein Verfahren zum Prüfen einer Fügeoberfläche eines Faserverbundbauteils sowie ein Verfahren zum Verkleben bekannt, indem ein Prüfgewebe mit einer Klebstoffgrundierung auf das Faserverbundbauteil aufgeklebt und ausgehärtet und anschließend abgerissen wird, wobei die Fügeoberfläche qualitativ hinsichtlich des Bruchbildes analysiert wird. Außerdem lässt sich auch ein derartiges Bruchbild, das durch die Klebstoffgrundierung gebildet wurde, durch Auftragen eines Klebwerkstoffes und Fügen mit einem weiteren Bauteil eine Klebverbindung herstellen.

Es hat sich allerdings gezeigt, dass die zusätzliche Klebstoffgrundierung den gesamten Herstellungsprozess verkomplizieren kann. Es hat sich außerdem gezeigt, dass die in der Praxis oftmals verwendeten Multifilamentgewebe als Abreißgewebe für ein derartiges Verfahren bei bestimmten zu applizierenden Werkstoffen nicht geeignet sind. Denn einerseits soll durch das Abreißen des Gewebes eine saubere, aktivierte Oberfläche erzeugt werden, während andererseits das Gewebe möglichst ohne hohen Kraftaufwand händisch abgezogen werden soll, wobei das Bauteil dabei nicht beschädigt werden darf. Um eine besonders adhäsionsfähige Oberfläche zu erzeugen, müssen bei polymeren Matrixwerkstoffen chemische Ketten des Matrixwerkstoffes aufgebrochen werden. Dies gelingt dadurch, dass mit dem Gewebe ein Teil des darunterliegenden Matrixmaterials entfernt wird. Um Matrixmaterial herauszubrechen, wird jedoch ein erhöhter Kraftaufwand benötigt und die Gefahr einer Beschädigung der Faserverbundstruktur, insbesondere der Verstärkungsfasern, steigt dadurch deutlich an.

Bei der Verwendung eines Multifilamentgewebes als Abreißgewebe, die zum Zwecke des leichten Ablösens sehr dicht gewoben und keine oder nur sehr geringe Freiräume zwischen den Schuss- und Kettfäden aufweisen, entsteht nach dem Abreißvorgang daher meist eine völlig glatte Oberfläche, welche lediglich eine wellige Topologie durch den Abdruck der Gewebefäden aufweist. Eine umfangreiche chemische Aktivierung findet jedoch in den seltensten Fällen statt. Hierzu kommt, dass auf der generierten Oberfläche Rückstände der Fasern oder von Stoffen, welche sich auf den Fasern befunden haben, zurückbleiben können. Somit kann keine gesicherte Aussage getroffen werden, ob auf der durch dieses Verfahren erzeugten Oberfläche sicher geklebt oder lackiert werden kann. Aufwendige Kontrollen, Nacharbeit durch Schleifen oder Strahlen und ein hoher Aufwand bei der Qualitätssicherung sind demzufolge notwendig.

Aus der US 7,736,452 B2 ist ein Verfahren zum zerstörungsfreien Überprüfen einer Klebverbindung bei der Reparatur von Faserverbundbauteilen bekannt, wobei hier die Überprüfung der Klebverbindung indirekt erfolgt. Die beschädigte Stelle an dem Faserverbundbauteil wird in einem ersten Schritt repariert und ein entsprechendes eingeklebtes Reparaturpatch verwendet. Anschließend wird in der näheren Umgebung der reparierten Stelle ein Testpatch, welches die gleichen Eigenschaften und das gleiche Material aufweist, wie das Reparaturpatch, aufgeklebt und nach dem Aushärten der Klebverbindung mit einer entsprechenden Kraft belastet. Hält der Testpatch der derart aufgebrachten Kraft stand, so wird von der Haltbarkeit der reparierten Stelle ausgegangen.

Aus der US 2008/0011075 A1 ist ein Verfahren zur Qualitätskontrolle eines Faserverbundbauteils und einer möglichen Klebverbindung bekannt, wobei hier eine metallische Struktur auf die Oberfläche des Faserverbundbauteils aufgeklebt wird. Die metallische Struktur weist dabei eine Sollbruchstelle auf. Nach dem Aushärten der Klebverbindung wird die metallische Struktur nun mit einer Kraft beaufschlagt, wobei von einer wirksamen Klebverbindung mit der Oberfläche des Faserverbundbauteils dann ausgegangen wird, wenn zunächst die Sollbruchstelle bricht. Bricht anstelle der Sollbruchstelle jedoch die Klebverbindung, so war diese nicht fehlerfrei.

Die Forumsdiskussion Reefmagnet: "Peel ply... how difficult / easy...", 19. November 2014 (2014-11-19), Gefunden im Internet: URL: http://www.cruisersforum.com/forums/f55/peel-ply -how-difficult-easy-136700.html (abgerufen am 25. Juli 2019) beschäftigt sich mit der Vorbehandlung von Oberflächen. Hierfür wird ein mit einem Epoxidharz getränktes Abreißtextil (peel ply) vorgeschlagen, was jedoch auf bereits bestehende, fertige Bauteile aufgeklebt werden soll. Nach dem Abreißen dieses Abreißtextils soll die dadurch entstandene Oberfläche für eine weitere Behandlung entsprechend vorbereitet sein.

Die US 4,902,215 offenbart eine Fließhilfe in einem Infusionsprozess bei der Herstellung von Faserverbundbauteilen. Das Dokument zeigt dabei einen klassischen Infusionsprozess, bei dem ein Gewebe zwischen dem herzustellenden Bauteil und einer Fließ- und Verteilschicht für das Matrixmaterial angeordnet ist. Das Gewebe wird dabei zusammen mit dem Bauteil ausgehärtet und zu einem späteren Zeitpunkt von dem hergestellten Bauteil abgeschält.

Die GB 2 360 483 A offenbart ebenfalls eine Verteilschicht für das Matrixmaterial in einem Infusionsprozess, wobei wie bei der US 4,902,215 diese Verteilschicht nicht als vorbereitende Maßnahme für das Applizieren zusätzlicher Werkstoffe nach dem Herstellen des Bauteils dient.

Es ist demzufolge Aufgabe der vorliegenden Erfindung ein verbessertes Verfahren zum Applizieren eines Werkstoffes anzugeben, mit dem die Oberfläche des Faserverbundbauteils so vorbereitet werden kann, dass ein Anhaften des Werkstoffes unter den gegebenen Prozessparametern gewährleistet werden kann.

Die Aufgabe wird mit dem Verfahren gemäß Anspruch 1 erfindungsgemäß gelöst. Gemäß Anspruch 1 wird ein Verfahren zum Applizieren eines Werkstoffes auf ein Faserverbundbauteil innerhalb eines Applikationsbereiches des Faserverbundbauteils vorgeschlagen, wobei das Faserverbundbauteil aus einem Faserverbundwerkstoff aufweisend ein Fasermaterial und ein Matrixmaterial hergestellt wird. Der zu applizierende Werkstoff kann dabei beispielsweise ein Klebstoff sein, um das Faserverbundbauteil mit einem anderen Bauelement zu fügen. Der Werkstoff kann aber auch der Beschichtung des Faserverbundbauteils dienen, beispielsweise in Form von Lacken. Unter dem Applizieren eines Werkstoffes auf ein Faserverbundbauteil wird dabei verstanden, dass ein Werkstoff stoffschlüssig mit dem Faserverbundbauteil verbunden wird, bspw. ein dem Faserverbundwerkstoff fremder oder anderer Werkstoff, der kein Faserverbundwerkstoff ist, so dass der applizierte Werkstoff stoffschlüssig an dem Faserverbundbauteil hält. Das Applizieren des Werkstoffes soll dabei insbesondere nach dem vollständigen Aushärten des das Fasermaterial einbettenden Matrixmaterials erfolgen. Denkbar ist aber auch, dass das Applizieren bereits zu einem Zeitpunkt erfolgt, zu dem das Matrixmaterial noch nicht vollständig ausgehärtet ist, z.B. durch eine nicht vollständig abgelaufene Härtungsreaktion oder durch ein speziell angepasstes Harz-Härter-Verhältnis in dem das Fasermaterial einbettenden Matrixmaterials.

Erfindungsgemäß wird dabei zumindest ein Monofilamentgewebe bereitgestellt, bei dem mehrere oder alle Fäden jeweils aus einem Einzelfilament bestehen. Ein derartiges Monofilamentgewebe weist somit Fäden (Schussfaden, Kettfaden) auf, die nicht wie bei einem Multifilamentgewebe jeweils aus einer Mehrzahl von Einzelfilamenten bestehen, sondern bei dem die einzelnen Fäden an sich ein einzelnes Filament darstellen. Ein derartiger Faden eines Monofilamentgewebes weist demzufolge nicht eine Mehrzahl von Einzelfilamenten auf, sondern wird ausschließlich aus einem Einzelfilament gebildet. Üblicherweise werden die einzelnen Fäden bzw. Einzelfilamente in einem einzigen Verarbeitungsschritt verarbeitet.

Ein derartiges Monofilamentgewebe wird nun in Form eines Abreißgewebes auf die Faserpreform im Applikationsbereich angeordnet. Die Faserpreform wird dabei aus dem Fasermaterial des Faserverbundwerkstoffes gebildet und kann insbesondere aus trockenen oder vorimprägnierten Fasermaterialien gebildet werden. Das Monofilamentgewebe im Applikationsbereich dient später dazu, die Oberfläche innerhalb des Applikationsbereiches dahingehend vorzubereiten, dass die Oberfläche im Applikationsbereich eine hohe Oberflächenenergie aufweist und somit für das Applizieren des Werkstoffes entsprechend vorbereitet ist.

Nachdem das Monofilamentgewebe auf das Fasermaterial der Faserpreform im Applikationsbereich angeordnet wurde, wird das das Fasermaterial der Faserpreform einbettende Matrixmaterial sowie ein das Monofilamentgewebe einbettendes Matrixmaterial in einem gemeinsamen Prozessschritt ausgehärtet, um so insbesondere auch das Faserverbundbauteil herzustellen. Dabei kann sowohl für das Fasermaterial der Faserpreform als auch für das Monofilamentgewebe dasselbe Matrixmaterial verwendet werden, so dass für das Monofilamentgewebe das gleiche Matrixmaterial verwendet wird, wie für das Fasermaterial der Faserpreform. Denkbar ist allerdings auch, dass hier unterschiedliche Fasermaterialien verwendet würden, was beispielsweise dann sinnvoll ist, wenn vorimprägnierte Materialien verwendet werden, d.h. das Fasermaterial der Faserpreform und/oder das Monofilamentgewebe sind bereits mit dem jeweiligen Matrixmaterial vorimprägniert.

Durch das Aushärten der Matrixmaterialien entsteht somit im Grenzbereich zwischen Faserpreform und Monofilamentgewebe eine feste Verbindung, wodurch das Monofilamentgewebe zunächst stoffschlüssig mit dem Faserverbundbauteil im Applikationsbereich verbunden wird. Nachdem das Matrixmaterial der Faserpreform und das Matrixmaterial des Monofilamentgewebes somit zumindest teilweise ausgehärtet ist, d.h. zumindest eine Teilreaktion hinsichtlich der Polyreaktion oder Polymerisation stattgefunden hat und somit das Monofilamentgewebe stoffschlüssig an die Faserpreform angefügt wurde, wird das mit der Faserpreform stoffschlüssig verbundene Monofilamentgewebe abgerissen, wodurch das Matrixmaterial im Applikationsbereich insbesondere kohäsiv gebrochen wird. Kohäsiv gebrochen bedeutet, dass das Matrixmaterial in sich selbst gebrochen ist, d.h. beim Bruch geht ein Riss durch das Material. Die so entstandene Oberfläche ist besonders erwünscht und erzeugt dabei eine hohe Oberflächenenergie, an der andere Werkstoffe besonders gut anhaften und die gut benetzbar ist.

Anschließend wird der entsprechende Werkstoff innerhalb des Applikationsbereiches nach dem Abreißen des Monofilamentgewebes appliziert. Es wurde bei der vorliegenden Erfindung vorteilhafterweise erkannt, dass durch die Verwendung eines Monofilamentgewebes als Abreißgewebe zur Vorbereitung einer Applikationsoberfläche erreicht werden kann, dass trotz hohem Anteil an Kohäsionsbruch kaum Laminatschäden beim Entfernen des Abreißgewebes auftreten. Aus der Praxis bekannte Multifilamentgewebe führen trotz sehr geringem Anteil an Kohäsionsbruch häufig zu Laminatschäden. In Multifilamentgeweben kommt es häufig zu einem großflächigen Kontakt und zum teilweisen Ineinandergleiten zwischen Verstärkungsfasern und der Vielzahl von benachbarten Filamenten des Abreißgewebes. Dies führt teilweise zum unerwünschten Herauslösen von Verstärkungsfasern beim Entfernen des Abreißgewebes. Die Verwendung eines Monofilamentgewebes hingegen erzeugt diese Nachteile nicht und bieten aufgrund ihrer in der Regel vielfach größeren Filamentdurchmesser und den freiliegenden Filamenten (ohne direkte Nachbarn) wenig Möglichkeit zum Mitreißen von Verstärkungsfasern. Der Kohäsivbruch wird in der Regel im Bereich des dünnsten Querschnitts der Gewebeöffnung erzeugt und ist somit räumlich von den Verstärkungsfasern getrennt, wobei die beim Bruch anliegende mechanische Spannung im Bereich der entstehenden Bruchfläche aufgrund der Kerbwirkung größer ist, als auf der Ebene der Verstärkungsfasern.

Es wurde bei der vorliegenden Erfindung vorteilhafterweise weiterhin erkannt, dass der Einsatz von Monofilamentgeweben zu einem rückstandsfreien Herauslösen des Abreißgewebes führt. Dies ist ebenfalls der freiliegenden Filamente und ihrer größeren Durchmesser geschuldet. Im Falle von Multifilamentgeweben bleiben häufig Teile oder Bruchstücke der Filamente auf der Bauteiloberfläche zurück, welche für einen nachfolgenden Prozess zum stoffschlüssigen Fügen besonders nachteilhaft sind.

Des Weiteren führt die Verwendung eines Monofilamentgewebes als Abreißgewebe zu einer sehr starken Oberflächenvergrößerung und Oberflächentexturierung. Die vergrößerte Oberfläche ist dabei besonders vorteilhaft für nachfolgende Beschichtungsoperationen, da mehr Kontaktfläche zur Ausbildung von Adhäsionskräften zur Verfügung steht. Durch die Oberflächentexturierung kann sich zusätzlich ein Formschluss ausbilden, sodass insbesondere Beschichtungen und Klebstoffe besonders gut an derartig vorbereiteten Oberflächen haften.

Erfindungsgemäß ist vorgesehen, dass ein Monofilamentgewebe bereitgestellt wird, bei dem die Summe aller offenen Flächen der Maschen des Monofilamentgewebes mindestens 30 % der gesamten Grundfläche des Monofilamentgewebes entspricht.

Hierdurch wird erreicht, dass innerhalb der offenen Flächen einer Masche beim Abreißen des Monofilamentgewebes eine kohäsive Bruchfläche entsteht, was durch die Ausführung des Monofilamentgewebes aus Einzelfilamenten besonders begünstigt wird. Diese kohäsiven Bruchflächen sind dabei besonders wünschenswert, da sie eine besonders hohe Oberflächenenergie aufweisen.

Bei dem Monofilamentgewebe kann es sich beispielsweise um eine Leinwandbindung, Köperbindung, Atlasbindung, Tressengewebe, Drehergewebe und/oder triaxiales Gewebe handeln.

Bei dem Faserverbundbauteil handelt es sich nicht um einen Prüfkörper, der lediglich zu Test- und Überprüfungszwecken hergestellt wird und danach keine weitere Verwendung findet. Vielmehr handelt es sich bei dem Faserverbundbauteil im Sinne der vorliegenden Erfindung um ein reales Bauteil, dass nach der Herstellung einen entsprechenden vorgesehenen Verwendungszweck hat.

In einer weiteren vorteilhaften Ausführungsform ist das Monofilamentgewebe derart ausgebildet, dass ein oder mehrere Schussfäden und/oder ein oder mehrere Kettfäden jeweils aus einem Einzelfilament bestehen, vorteilhafterweise sind jedoch sämtliche Schussfäden und sämtliche Kettfäden als Einzelfilamente ausgebildet.

In einer besonders vorteilhaften Ausführungsform wird ein Monofilamentgewebe bereitgestellt, bei dem die Summe aller offenen Flächen der Maschen des Monofilamentgewebes mindestens 50 %, vorzugsweise zwischen 50% und 70% der gesamten Grundfläche des Monofilamentgewebes entspricht. Die offenen Flächen einer Masche des Monofilamentgewebes definiert sich dabei aus der Ausdehnung der Maschen in eine erste Dimension und in eine zweite flächige Dimension (meist quadratisch), wobei die Summe der offenen Flächen aller Maschen mindestens 30 % der Gesamtfläche des gesamten Monofilamentgewebes entspricht.

Daher ist es ebenso besonders vorteilhaft, wenn ein Monofilamentgewebe bereitgestellt wird, welches nach dem Abreißen von dem Faserverbundbauteil eine kohäsiv gebrochene Fläche hat, die mindestens 30 %, vorzugsweise mindestens 50%, besonders vorzugsweise zwischen 50% und 70% der geometrischen Fläche des Applikationsbereiches entspricht. Das heißt, die Summe aller kohäsiv gebrochenen Flächen innerhalb des Applikationsbereiches entspricht in Summe mindestens 30 %, vorzugweise mindestens 50 %, besonders vorzugsweise zwischen 50% und 70% der gesamten Fläche des Applikationsbereiches.

In einer weiteren vorteilhaften Ausführungsform wird das Monofilamentgewebe mit Einzelfilamenten aus Polyester, Polyethylen, Polyethylenterephthalat, Polyamid und/oder Metall, insbesondere Stahl, bereitgestellt.

So hat es sich gezeigt, dass einem Abreißgewebe aus Stahl, insbesondere rostfreiem Stahl mit bspw. einer Chromoxidschicht, die zu verklebende Oberfläche des Bauteils besonders gut auf eine Klebung vorbereitet wird, da der Anteil des Kohäsivbruches besonders hoch ist und auf der Oberfläche kaum Rückstände verbleiben, die eine Klebung negativ beeinflussen. Dadurch können auch weniger robuste Klebstoffe auf der Faseroberfläche sehr gut und dauerhaft anhaften. Hintergrund ist vermutlich, dass zwischen der inerten Chromoxidschicht an der Oberfläche von Gewebe aus rostfreiem Stahl und dem Matrixmaterial keine für das Kleben abträgliche Interaktion stattfindet. Bei der Verwendung von Abreißgeweben aus polymeren Werkstoffen können hingegen Rückstände auf der Bauteiloberfläche verbleiben, die eine Anhaftung des Klebstoffes negativ beeinträchtigen.

Des Weiteren ist es denkbar, dass als Werkstoff ein Klebstoff appliziert und ein Bauelement mittels des applizierten Klebstoffes an das Faserverbundbauteil klebend gefügt wird. Ein solcher Klebstoff kann dabei separat in den Applikationsbereich auf die kohäsiv gebrochene Oberfläche aufgetragen werden, wobei anschließend dann das zu fügende Bauelement angeklebt wird. Denkbar ist aber auch, dass Klebstoff und anzufügendes Bauelement in einem gemeinsamen Prozessschritt auf die kohäsiv gebrochene Oberfläche im Applikationsbereich angefügt wird. Des Weiteren ist es denkbar, dass als Werkstoff eine Beschichtung appliziert wird, wie beispielsweise Lacke.

In einer weiteren vorteilhaften Ausführungsform weisen ein oder mehrere Fäden, vorzugsweise alle Fäden bzw. Einzelfilamente des Monofilamentgewebes eine funktionale Beschichtung auf, wobei zumindest ein Teil des Beschichtungsstoffes nach dem Abreißen auf dem Faserverbundbauteil verbleibt (bspw. in den Abdruckbereichen der Einzelfilamente) und weitere Funktionen übernimmt, bspw. als Rissstopper oder als Haftvermittler). Die funktionale Beschichtung geht eine feste Verbindung mit dem Matrixmaterial des Bauteils ein und löst sich von der Faser ab, sobald das Gewebe abgerissen wird.

Die Aufgabe wird im Übrigen auch mit dem Verwendungsanspruch 11 gelöst, wobei hier eine Verwendung eines Monofilamentgewebes, bei dem mehrere oder alle Fäden jeweils aus einem Einzelfilament bestehen, als Abreißgewebe beim Applizieren eines Werkstoffes auf ein Faserverbundwerkstoff gemäß dem vorstehend beschriebenen Verfahren beansprucht wird.

Die Erfindung wird anhand der beigefügten Figuren beispielhaft näher erläutert. Es zeigen:
- Figur 1a-1d -: Schematische Darstellung der wesentlichen Verfahrensschritte des erfindungsgemäßen Verfahrens;
- Figur 2 -: Schematische Darstellung eines Monofilamentgewebes;
- Figur 3 -: Schematisch-Makroskopische Darstellung eines Bruchbildes.

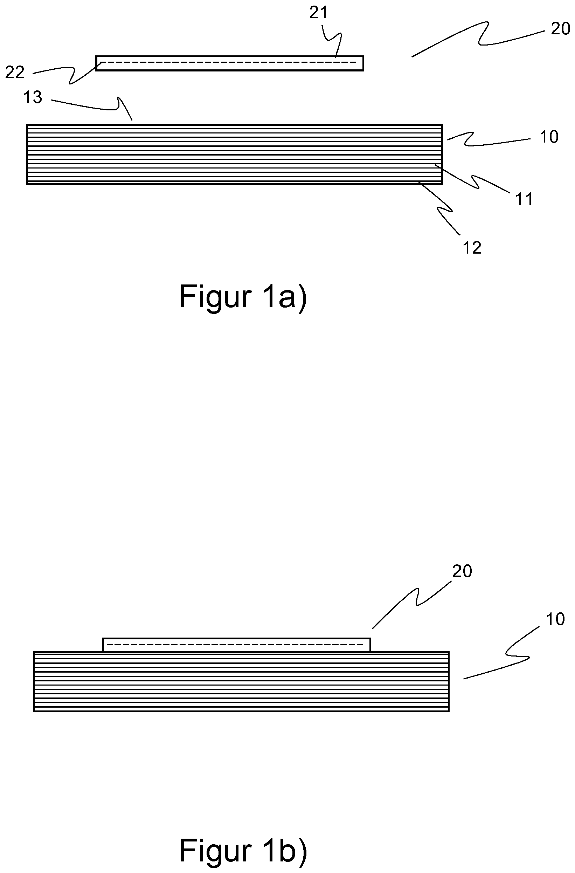

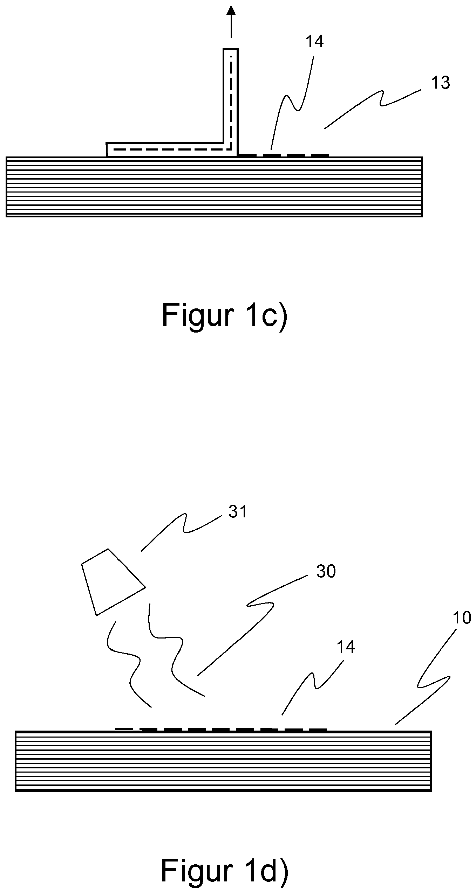

In den Figuren 1a-1d wird ein möglicher Verlauf des erfindungsgemäßen Verfahrens zum Applizieren eines Werkstoffes dargestellt. So wird im ersten Schritt 1a zunächst eine Faserpreform 10 bereitgestellt, die zumindest teilweise die spätere Bauteilform des herzustellenden Faserverbundbauteils aufweist. Die Faserpreform 10 ist dabei aus einem Fasermaterial 11 gebildet worden, indem mehrere Lagen Fasermaterialien übereinandergelegt wurden. Im Beispiel der Figur 1a ist eine sehr stark vereinfachte Bauteilform dargestellt. Es ist selbstverständlich, dass hier jede beliebige komplexe Bauteilform hergestellt werden kann.

Des Weiteren wurden vorimprägnierte Fasermaterialien 11 verwendet, so dass bereits bei der Herstellung der Faserpreform 10 das das Fasermaterial 11 einbettende Matrixmaterial 12 in der Faserpreform 10 enthalten ist.

Des Weiteren wird ein Monofilamentgewebe 20 bereitgestellt, das ebenfalls bereits ein Matrixmaterial 21 enthält und somit ebenfalls vorimprägniert ist. Das Monofilamentgewebe 20 weist eine Mehrzahl von Gewebefäden 22 auf, die als Einzelfilamente ausgebildet sind.

Im nächsten Verfahrensschritt 1b wird nun das Monofilamentgewebe 20 innerhalb eines Applikationsbereiches 13 der Faserpreform angeordnet, wobei innerhalb des Applikationsbereiches 13 später ein anderer Werkstoff appliziert werden soll. Im Schritt 1b wird aber nun zunächst in den Applikationsbereich 13 das Monofilamentgewebe 20 angeordnet, wobei dabei das Matrixmaterial 12 der Faserpreform 10 und das Matrixmaterial 21 des Monofilamentgewebes 20 miteinander in Berührung kommen und ggf. sich miteinander im Grenzbereich (Grenzschicht) vermischen.

Anschließend wird das Matrixmaterial 12 der Faserpreform 10 und das Matrixmaterial 21 des Monofilamentgewebes 20 zumindest teilweise ausgehärtet, wobei hierdurch das Monofilamentgewebe 20 stoffschlüssig mit der Faserpreform 10 bzw. dem Faserverbundbauteil verbunden wird.

Anschließend wird, wie in Figur 1c gezeigt, das Monofilamentgewebe 20 senkrecht zu der Faserpreform 10 bzw. des Faserverbundbauteils abgerissen, so dass die stoffschlüssige Verbindung zwischen dem Monofilamentgewebe 20 und dem Faserverbundbauteil bzw. der Faserpreform 10 innerhalb des Applikationsbereiches 13 kohäsiv aufgebrochen wird. Die dabei entstandene raue Oberfläche 14 innerhalb des Applikationsbereiches 13 weist dabei eine hohe Oberflächenenergie auf, wobei durch die Verwendung eines Monofilamentgewebes insbesondere verhindert wird, dass Verstärkungsfasern des Fasermaterials 11 der Faserpreform 10 mit herausgerissen und beschädigt werden.

Der Anteil der kohäsiv gebrochenen Oberfläche innerhalb des Applikationsbereiches 13 kann dabei durch die offenen Flächen bzw. die Maschenweite des Monofilamentgewebes 20 eingestellt werden, wobei hierbei berücksichtigt werden muss, dass das Monofilamentgewebe als Abreißgewebe nach dem stoffschlüssigen Verbinden mit der Faserpreform 10 auch von dieser noch entfernt werden muss, ohne dass es hierbei reißt. Anschließend wird im Schritt 1d der eigentliche Werkstoff 30 innerhalb des Applikationsbereiches 13 appliziert, was beispielsweise mithilfe eines Applikators 31 erfolgen kann.

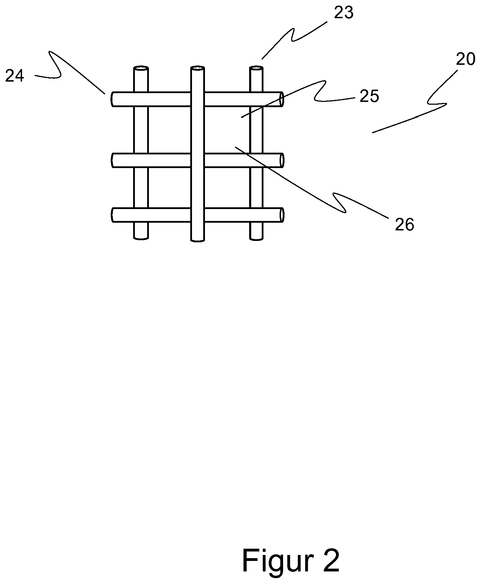

Figur 2 zeigt schematisch stark vereinfacht einen Ausschnitt aus einem Monofilamentgewebe 20, bei dem die Kettfäden 23 und der oder die Schussfäden 24 aus einem Einzelfilament bestehen. Das bedeutet, dass die Kettfäden 23 bzw. die Schussfäden 24 keine Multifilamente sind und somit nicht mehrere Filamente an sich aufweisen. Vielmehr besteht jeder Kettfaden 23 oder Schussfaden 24 aus einem einzelnen Filament. Eine Masche 25 wird dabei durch den jeweiligen Kettfaden bzw. Schussfaden begrenzt, wobei die offene Fläche 26 einer Masche 25 dabei derjenige Bereich ist, der durch die Maschenweite bzw. Maschenhöhe geometrisch definiert wird.

Innerhalb dieser offenen Fläche 26 wird dabei die stoffschlüssige Verbindung zwischen dem Monofilamentgewebe 20 und der Faserpreform bzw. dem Faserverbundbauteil 10 kohäsiv gebrochen, was zu der gewünschten Oberflächenenergie führt.

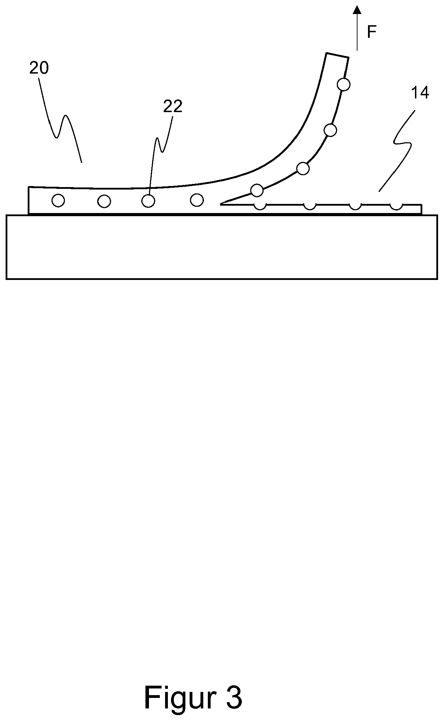

Figur 3 zeigt schematisch den Vorgang des Abreißens des Monofilamentgewebes 20 von der Faserpreform 10. Wie zu erkennen ist, werden zwischen den Einzelfilamenten 22 die stoffschlüssige Verbindung jeweils kohärent gebrochen, so dass sich hier eine kohäsive Oberfläche 14 ergibt.

### Bezugszeichenliste

- 10 -: Faserpreform
- 11 -: Fasermaterial
- 12 -: Matrixmaterial
- 13 -: Applikationsbereich
- 14 -: kohäsiv gebrochene Oberfläche
- 20 -: Monofilamentgewebe
- 21 -: Matrixmaterial des Monofilamentgewebes
- 22 -: Gewebefäden
- 23 -: Kettfäden
- 24 -: Schussfäden
- 25 -: Maschen
- 26 -: offene Flächen
- 30 -: zu applizierender Werkstoff
- 31 -: Applikator

## Patentansprüche

1. Verfahren zum Applizieren eines Werkstoffes auf ein Faserverbundbauteil innerhalb eines Applikationsbereiches (13) des Faserverbundbauteils, wobei das Faserverbundbauteil aus einem Faserverbundwerkstoff aufweisend ein Fasermaterial (11) und ein Matrixmaterial (12) hergestellt wird, **dadurch gekennzeichnet, dass** das Verfahren die folgenden Schritte umfasst:
- Bereitstellen zumindest eines Monofilamentgewebes (20), bei dem mehrere oder alle Fäden jeweils aus einem Einzelfilament bestehen, wobei das Monofilamentgewebe derart bereitgestellt wird, dass die Summe aller offenen Flächen der Maschen des Monofilamentgewebes mindestens 30 % der gesamten Grundfläche des Monofilamentgewebes entspricht,
- Anordnen des mindestens einen Monofilamentgewebes (20) auf eine aus dem Fasermaterial (11) des Faserverbundwerkstoffes gebildeten Faserpreform (10) im Applikationsbereich (13),
- Aushärten des das Fasermaterial (11) der Faserpreform (10) einbettenden Matrixmaterials (12) des Faserverbundwerkstoffes sowie ein das Monofilamentgewebe (20) einbettendes Matrixmaterial (21) in einem gemeinsamen Prozessschritt, und
nachdem das Matrixmaterial (12) der Faserpreform (10) und das Matrixmaterial (21) des Monofilamentgewebes (20) zumindest teilweise ausgehärtet ist,
- Abreißen des mit der Faserpreform (10) stoffschlüssig verbundenen Monofilamentgewebes (20), und
- Applizieren des Werkstoffes (30) in den Applikationsbereich (13) nach dem Abreißen des Monofilamentgewebes (20).

2. Verfahren nach Anspruch 1, **dadurch gekennzeichnet, dass** das Monofilamentgewebe (20) als Leinwandbindung, Köperbindung, Atlasbindung, Tressengewebe, Drehergewebe und/oder triaxiales Gewebe bereitgestellt wird.

3. Verfahren nach Anspruch 1 oder 2, **dadurch gekennzeichnet, dass** das Monofilamentgewebe (20) derart bereitgestellt wird, dass der oder die Schussfäden (24) und/oder oder die Kettfäden (23) jeweils aus einem Einzelfilamenten bestehen.

4. Verfahren nach einem der vorhergehenden Ansprüche, **dadurch gekennzeichnet, dass** das Monofilamentgewebe (20) derart bereitgestellt wird, dass die Summe aller offenen Flächen (26) der Maschen (25) des Monofilamentgewebes (20) mindestens 50%, vorzugsweise zwischen 50% und 70% der gesamten Grundfläche des Monofilamentgewebes (20) entspricht.

5. Verfahren nach einem der vorhergehenden Ansprüche, **dadurch gekennzeichnet, dass** das Monofilamentgewebe (20) derart bereitgestellt wird, dass die Summe aller kohäsiv gebrochenen Bereiche nach dem Abreißen des Monofilamentgewebes (20) innerhalb des Applikationsbereiches (13) mindestens 30%, vorzugsweise mindestens 50%, besonders vorzugsweise zwischen 50% und 70% der Gesamtfläche des Applikationsbereiches (13) entspricht.

6. Verfahren nach einem der vorhergehenden Ansprüche, **dadurch gekennzeichnet, dass** das Monofilamentgewebe (20) mit Einzelfilamenten aus Polyester, Polyethylen, Polyethylenterephthalat, Polyamid und/oder Metall, insbesondere Stahl, bereitgestellt wird.

7. Verfahren nach einem der vorhergehenden Ansprüche, **dadurch gekennzeichnet, dass** das Matrixmaterial (21), welches das Monofilamentgewebe (20) einbettet, das Matrixmaterial (12) des Faserverbundwerkstoffes ist, welches auch das Fasermaterial (11) der Faserpreform (10) einbettet, oder dass das Matrixmaterial (21), welches das Monofilamentgewebe (20) einbettet, ein von dem Matrixmaterial (12) des Faserverbundwerkstoffes, welches das Fasermaterial (11) der Faserpreform (10) einbettet, verschiedenes Material ist.

8. Verfahren nach einem der vorhergehenden Ansprüche, **dadurch gekennzeichnet, dass** das Fasermaterial (11) und/oder das Monofilamentgewebe (20) mit dem jeweiligen Matrixmaterial (12, 21) vorimprägniert ist oder dass das Matrixmaterial (12) des Faserverbundwerkstoffes in einem Infusionsschritt in das Fasermaterial (11) der Faserpreform (10) infundiert wird.

9. Verfahren nach einem der vorhergehenden Ansprüche, **dadurch gekennzeichnet, dass** als Werkstoff (30) ein Klebstoff appliziert und ein Bauelement mittels des applizierten Klebstoffes an das Faserverbundbauteil klebend gefügt wird und/oder dass als Werkstoff (30) eine Beschichtung appliziert wird.

10. Verfahren nach einem der vorhergehenden Ansprüche, **dadurch gekennzeichnet, dass** das ein oder mehrere Fäden des Monofilamentgewebes eine funktionale Beschichtung aufweisen, wobei zumindest ein Teil des Beschichtungsstoffes nach dem Abreißen auf dem Faserverbundbauteil verbleibt und weitere Funktionen übernimmt.

11. Verwendung eines Monofilamentgewebes (20), bei dem mehrere oder alle Fäden jeweils aus einem Einzelfilament bestehen, als Abreißgewebe beim Applizieren eines Werkstoffes (30) auf ein Faserverbundbauteil gemäß dem Verfahren nach einem der vorhergehenden Ansprüche.

## Claims

1. A method for applying a material to a fiber composite component within an application area (13) of the fiber composite component, wherein the fiber composite component is made of a fiber composite material comprising a fiber material (11) and a matrix material (12), **characterized in that** the method comprises the following steps:
- Providing at least one monofilament fabric (20), in which several or all threads each consist of a single filament, the monofilament fabric being provided in such a way that the sum of all open areas of the meshes of the monofilament fabric corresponds to at least 30% of the total base area of the monofilament fabric,
- Arranging of the at least one monofilament fabric (20) on a fiber preform (10) formed from the fiber material (11) of the fiber composite material in the application area (13),
- Curing the matrix material (12) of the fiber composite material embedding the fiber material (11) of the fiber preform (10) and a matrix material (21) embedding the monofilament fabric (20) in a common process step, and
after the matrix material (12) of the fiber preform (10) and the matrix material (21) of the monofilament fabric (20) have at least partially hardened,
- Tearing off the monofilament fabric (20) bonded to the fiber preform (10), and
- Applying of the material (30) into the application area (13) after tearing off the monofilament fabric (20).

2. Method according to claim 1, **characterized in that** the monofilament fabric (20) is provided as plain weave, twill weave, satin weave, dutch weave, leno weave and/or triaxial weave.

3. Method according to claim 1 or 2, **characterized in that** the monofilament fabric (20) is provided in such a way that the weft yarn or yarns (24) and/or the warp yarn or yarns (23) each consist of a single filament.

4. Method according to one of the preceding claims, **characterized in that** the monofilament fabric (20) is provided in such a way that the sum of all open areas (26) of the meshes (25) of the monofilament fabric (20) corresponds to at least 50%, preferably between 50% and 70%, of the total base area of the monofilament fabric (20).

5. Method according to one of the preceding claims, **characterized in that** the monofilament fabric (20) is provided in such a way that the sum of all cohesively broken areas after tearing off the monofilament fabric (20) within the application area (13) corresponds to at least 30%, preferably at least 50%, particularly preferably between 50% and 70% of the total area of the application area (13).

6. Method according to one of the preceding claims, **characterized in that** the monofilament fabric (20) is provided with individual filaments of polyester, polyethylene, polyethylene terephthalate, polyamide and/or metal, in particular steel.

7. Method according to one of the preceding claims, **characterized in that** the matrix material (21) which embeds the monofilament fabric (20) is the matrix material (12) of the fiber composite material which also embeds the fiber material (11) of the fiber preform (10), or **in that** the matrix material (21) which embeds the monofilament fabric (20) is a different material from the matrix material (12) of the fiber composite material which embeds the fiber material (11) of the fiber preform (10).

8. Method according to one of the preceding claims, **characterized in that** the fiber material (11) and/or the monofilament fabric (20) is pre-impregnated with the respective matrix material (12, 21) or **in that** the matrix material (12) of the fiber composite is infused into the fiber material (11) of the fiber preform (10) in an infusion step.

9. Method according to one of the preceding claims, **characterized in that** an adhesive is applied as the material (30) and a component is adhesively joined to the fiber composite component by means of the applied adhesive and/or **in that** a coating is applied as the material (30).

10. Method according to one of the preceding claims, **characterized in that** the one or more threads of the monofilament fabric have a functional coating, at least part of the coating material remaining on the fiber composite component after tearing and assuming further functions.

11. Use of a monofilament fabric (20), in which several or all threads each consist of a single filament, as a peel ply fabric when applying a material (30) to a fiber composite component according to the method according to one of the preceding claims.

## Revendications

1. Procédé d'application d'un matériau sur un élément composite renforcé de fibres à l'intérieur d'une zone d'application (13) de l'élément composite renforcé de fibres, l'élément composite renforcé de fibres étant fabriqué à partir d'un matériau composite à fibres comprenant un matériau fibreux (11) et un matériau de matrice (12),
**caractérisé en ce que** le procédé comprend les étapes suivantes consistant à :
- fournir au moins un tissu monofilament (20), dont plusieurs ou tous les fils sont constitués chacun d'un filament individuel, le tissu monofilament étant fourni de telle sorte que la somme de toutes les surfaces ouvertes des mailles du tissu monofilament corresponde à au moins 30 % de la surface de base totale du tissu monofilament,
- placer ledit au moins un tissu monofilament (20) sur une préforme de fibres (10), formée à partir du matériau fibreux (11) du matériau composite à fibres, dans la zone d'application (13),
- faire durcir le matériau de matrice (12) du matériau composite à fibres incorporant le matériau fibreux (11) de la préforme de fibres (10), ainsi qu'un matériau de matrice (21) incorporant le tissu monofilament (20), dans une étape de processus commune, et
une fois que le matériau de matrice (12) de la préforme de fibres (10) et le matériau de matrice (21) du tissu monofilament (20) ont durci au moins partiellement,
- arracher le tissu monofilament (20) relié par coopération de matière à la préforme de fibres (10), et
- appliquer le matériau (30) dans la zone d'application (13) après avoir arraché le tissu monofilament (20).

2. Procédé selon la revendication 1,
**caractérisé en ce que** le tissu monofilament (20) est fourni sous la forme d'une armure toile, d'une armure sergée, d'une armure satin, d'un tissu tressé, d'un tissu de gaze et/ou d'un tissu triaxial.

3. Procédé selon la revendication 1 ou 2,
**caractérisé en ce que** le tissu monofilament (20) est fourni de telle sorte que le ou les fils de trame (24) et/ou le ou les fils de chaîne (23) sont constitués chacun d'un filament individuel.

4. Procédé selon l'une des revendications précédentes,
**caractérisé en ce que** le tissu monofilament (20) est fourni de telle sorte que la somme de toutes les surfaces ouvertes (26) des mailles (25) du tissu monofilament (20) corresponde à au moins 50 %, de préférence à 50 % à 70 % de la surface de base totale du tissu monofilament (20).

5. Procédé selon l'une des revendications précédentes,
**caractérisé en ce que** le tissu monofilament (20) est fourni de telle sorte que la somme de toutes les zones rompues de manière cohésive après l'arrachage du tissu monofilament (20) à l'intérieur de la zone d'application (13) corresponde à au moins 30 %, de préférence à au moins 50 %, de manière particulièrement préférée à 50 % à 70 % de la surface totale de la zone d'application (13).

6. Procédé selon l'une des revendications précédentes,
**caractérisé en ce que** le tissu monofilament (20) est fourni avec des filaments individuels de polyester, de polyéthylène, de polyéthylène téréphtalate, de polyamide et/ou de métal, en particulier d'acier.

7. Procédé selon l'une des revendications précédentes,
**caractérisé en ce que** le matériau de matrice (21) qui incorpore le tissu monofilament (20) est le matériau de matrice (12) du matériau composite à fibres qui incorpore également le matériau fibreux (11) de la préforme de fibres (10), ou
**en ce que** le matériau de matrice (21) qui incorpore le tissu monofilament (20) est un matériau différent du matériau de matrice (12) du matériau composite à fibres qui incorpore le matériau fibreux (11) de la préforme de fibres (10).

8. Procédé selon l'une des revendications précédentes,
**caractérisé en ce que** le matériau fibreux (11) et/ou le tissu monofilament (20) est préimprégné avec le matériau de matrice respectif (12, 21), ou
**en ce que** le matériau de matrice (12) du matériau composite à fibres est perfusé dans le matériau fibreux (11) de la préforme de fibres (10) lors d'une étape de perfusion.

9. Procédé selon l'une des revendications précédentes,
**caractérisé en ce qu'**une colle est appliquée comme matériau (30), et un élément de construction est assemblé par collage à l'élément composite renforcé de fibres à l'aide de la colle appliquée, et/ou
**en ce qu'**un revêtement est appliqué comme matériau (30).

10. Procédé selon l'une des revendications précédentes,
**caractérisé en ce qu'**un ou plusieurs fils du tissu monofilament présentent un revêtement fonctionnel, et, après l'arrachage, au moins une partie de la substance de revêtement reste sur l'élément composite renforcé de fibres et assume d'autres fonctions.

11. Utilisation d'un tissu monofilament (20), dont plusieurs ou tous les fils sont constitués chacun d'un filament individuel, à titre de tissu d'arrachage lors de l'application d'un matériau (30) sur un élément composite renforcé de fibres par le procédé selon l'une des revendications précédentes.
